# EUROPEAN PATENT APPLICATION

(11) **EP 2 853 678 A2**
(43) Date of publication of application: **01.04.2015**
(21) Application number: 14186200.3
(22) Date of filing: 24.09.2014
(51) Int. Cl.: E21B 10/00

(54) **Polycrystalline diamond compact bit manufacturing**

(30) Priority: 27.09.2013 US 201314040286
(71) Applicant: Varel Europe S.A.S., 64000 Pau (FR)
(72) Inventor: Dourfaye, Alfazazi, 75011 Paris (FR); Thigpen, Gary M, Houston, TX 77094 (US)
(74) Representative: Haley, Stephen

(57) **Abstract**

A method (500) of manufacturing PDC drill bits includes inspecting a plurality of cutters (118). The method further includes inspecting a plurality of pockets (120) of a bit body. A cutter of the plurality of cutters is assigned to a pocket of the plurality of pockets based on the inspection of the plurality of cutters and the inspection of the plurality of cutter pockets. A robot (106) positions the cutter inside the pocket and applies heat to a brazing material to produce a molten brazing material within the pocket.

## Description

### TECHNICAL FIELD

The present disclosure relates generally to downhole tools used in subterranean drilling, and more particularly, to the manufacture of drill bits that have polycrystalline diamond compact (PDC) cutters.

### BACKGROUND

Drill bits are commonly used for drilling bore holes or wells in earth formations. A PDC drill bit may include a tungsten carbide or steel body and a plurality of cutters (PDC cutters) that have a polycrystalline diamond (PCD) portion. The PCD portion of a PDC cutter is typically exposed to the earth formation. PDC includes a polycrystalline diamond table that enables PDC cutters to have high level of hardness and resistance to wear.

Typically, PDC cutters and the bit body of a drill bit are manufactured separately, and the PDC cutters are subsequently attached to the bit body. After a PDC cutter is placed in a corresponding pocket in the bit body, a brazing operation is performed to attach the PDC cutter to the bit body (i.e., to the wall of the pocket). A braze material (e.g., an alloy, such as Castolin 1703, BAG 22 and BAG 24) is commonly used in the brazing operation to secure each PDC cutter to the bit body within its corresponding pocket. For example, after a braze alloy is placed between a PDC cutter and the wall of a pocket, heat may be applied (typically using a blow torch) to melt the braze alloy, which also heats up the PDC cutter that is in the pocket. Upon removal of the heat, the melted braze alloy solidifies to bond the PDC cutter to the wall of the pocket.

Brazing operations are generally performed manually by one or more individuals. For example, one individual may apply heat to a braze alloy to melt the braze alloy within a cutter pocket while another individual spins the PDC cutter within the pocket to evenly distribute the melted braze alloy. Unfortunately, a manual brazing operation can be a source of many problems that detrimentally affect the quality of a PDC drill bit. For example, a significant factor that affects the quality of PDC drill bit is excessive exposure of the PDC cutters to heat. Both excessive duration of exposure to heat and excessive temperature caused by the applied heat are factors that can diminish the quality of the PDC cutters due to thermal damage to the PCD portion of the PDC cutters.

For example, because a brazing operator often relies on the operator's own judgment to determine whether a brazing alloy is adequately melted to properly bond a PDC cutter within a cutter pocket of a bit body, the brazing operator may mistakenly expose the PDC cutter to heat for an excessive duration of time and/or to excessive temperature that result in the PDC cutter being damaged. Further, the bond between the PDC cutter and the pocket may not be properly formed due to an operator's misjudgment on whether braze alloy is adequately melted within the cutter pocket. Because different brazing operators may make different decisions on the adequate duration and amount of heat (for example, from a blow torch) that is needed to melt the brazing alloy, PDC drill bits manufactured by the same entity may have inconsistent levels of quality.

### BRIEF DESCRIPTION OF THE DRAWINGS

The foregoing and other features and aspects of the invention will be best understood with reference to the following description of certain exemplary embodiments of the invention, when read in conjunction with the accompanying drawings, wherein:
Figure 1 illustrates a system for manufacturing PDC drill bits in accordance with an exemplary embodiment;
Figure 2 illustrates a snapshot of a cutter pocket inspection being performed by the system of Figure 1 in accordance with an exemplary embodiment;
Figure 3 illustrates a snapshot of a cutter placement being performed in accordance with an exemplary embodiment;
Figure 4 illustrates a snapshot of an automated brazing operation being performed in accordance with an exemplary embodiment;
Figure 5 illustrates a method of manufacturing PDC drill bits including an automated brazing operation that uses the system of Figure 1 in accordance with an exemplary embodiment; and
Figure 6 illustrates a computer system including a controller that controls operation of the system of FIG. 1 in accordance with an exemplary embodiment.

The drawings illustrate only exemplary embodiments of the invention and are therefore not to be considered limiting of its scope, as the invention may admit to other equally effective embodiments.

### DETAILED DESCRIPTION OF THE INVENTION

The present disclosure relates generally to downhole tools used in subterranean drilling. In particular, this disclosure relates to the manufacture of drill bits that have cutters (e.g., PDC cutters) that are adversely affected by excessive heat during drill bit manufacturing processes. Although the description of the exemplary embodiments is provided with respect to PDC drill bits and PDC cutters, embodiments that include drill bits other than PDC drill bits are contemplated within the scope of this description.

The present invention may be better understood by reading the following description of non-limiting, exemplary embodiments with reference to the attached drawings, wherein like parts of each of the figures are identified by like reference characters. According to an exemplary embodiment, a method of manufacturing PDC drill bits includes inspecting a plurality of cutters to determine a size of each cutter of the plurality of cutters. The method further includes inspecting a plurality of pockets of a bit body to determine a size of each pocket of the plurality of pockets. A cutter of the plurality of cutters is assigned to a pocket of the plurality of pockets based on the inspection of the plurality of cutters and the inspection of the plurality of cutter pockets. A robot positions the cutter inside the pocket and applies heat to a brazing material to produce a molten brazing material within the pocket.

According to an exemplary embodiment, a system for manufacturing PDC drill bits includes a camera for inspecting a plurality of cutters and for inspecting a plurality of pockets of a bit body. The system further includes a robot configured to position a PDC cutter of a plurality of PDC cutters inside a pocket of a plurality of pockets of the bit body and to apply heat to a brazing material to produce a molten brazing material within the pocket of the plurality of pockets. The system further includes a heating system for heating the bit body including the plurality of pockets to a preheat temperature.

According to an exemplary embodiment, an automated device for use in a manufacture of PDC drill bits includes a controller, a first arm for positioning a cutter of a plurality of cutters inside a pocket of a plurality of pockets of a bit body, and a second arm for applying heat to a brazing material to produce a molten brazing material within the pocket of the plurality of pockets, wherein the controller is configured to control the first arm and the second arm.

According to an exemplary embodiment, a computer system includes a module for controlling inspections of a plurality of cutters and inspections of a plurality of pockets of a bit body. The computer system further includes a module for controlling assignment of a cutter of the plurality of cutters to a pocket of the plurality of pockets based on the inspection of the plurality of cutters and the inspection of the plurality of cutter pockets. The computer system also includes a module for controlling operations of a robot in positioning the cutter of the plurality of cutters inside the pocket of the plurality of pockets, and a module for controlling application of heat by the robot to a brazing material to produce a molten brazing material within the pocket.

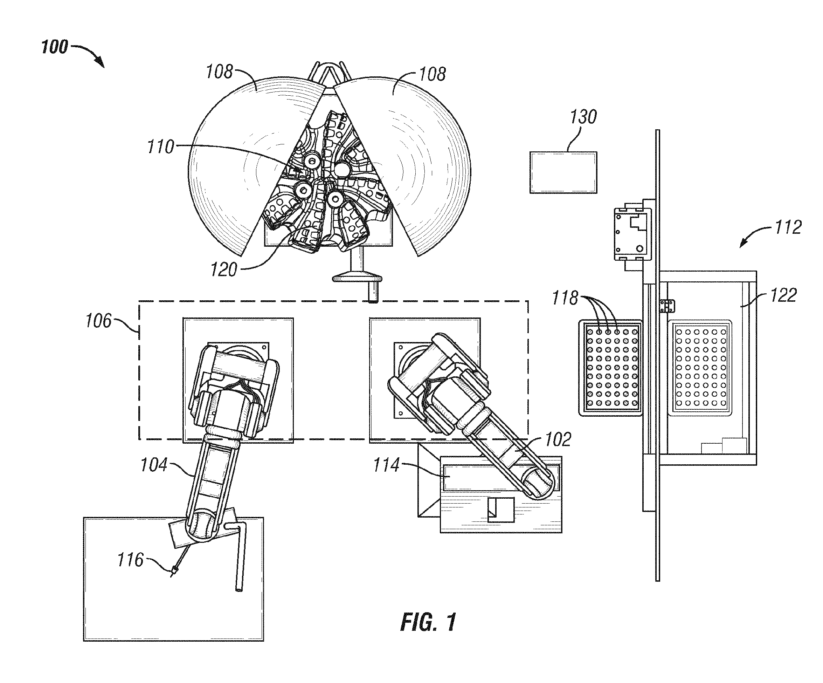

Figure 1 illustrates a system 100 for manufacturing PDC drill bits in accordance with an exemplary embodiment. The system 100 includes an automated device (hereinafter referred to as a robot) 106 that includes robot arms 102, 104. The system 100 also includes a controller 130 that controls various operations of the system 100. The robot 106 may include its own controller that, for example, controls operations of the arms 102, 104 in accordance with an exemplary embodiment. Alternatively, the controller 130 may be included in the robot 106. The system 100 further includes a heating system 108 that is positioned around a portion of a bit body 110. Further, a flux application system 112 may be used to apply a flux material to PDC cutters 118 (interchangeably referred to as cutters hereinafter with respect to all figures) that are each subsequently positioned in a corresponding pocket of the pockets 120 of the bit body 110.

The robot arms 102, 104 of the robot 106 may perform a number of functions. For example, an end piece of each arm 102, 104 may be changed to a different piece, as needed, to perform different functions. One of the arms 102, 104 may operate one or more cameras 114 to inspect PDC cutters 118 to determine a shape and size of each cutter. The robot 106 may also use the arms 102, 104 to inspect the pockets 120 of the bit body 110 to determine a shape and size of each pocket. One or more subsequent inspection of the pockets 120 may be performed following the initial inspection to help in the positioning of each cutter in a corresponding pocket. Following the initial inspection of the cutters 118, the controller 130 or another controller may perform image analysis on image information from the one or more cameras 114 to determine the shape and size of each cutter and each pocket. Each cutter may be assigned to a corresponding pocket in the bit body 110 based on the inspection of the cutters 118 and the pockets 120. For example, each cutter may be assigned to a pocket based on the size of the cutter and the size of the pocket. Alternatively, each cutter may also be assigned to a pocket based on both the shape and size of the cutter and of the pocket.

After the pockets are inspected and each cutter is assigned to a corresponding pocket, a flux material, such as Degussa h80, may be applied to the bit body 110. The flux material is applied to the bit body 110 to minimize oxidation of the bit body 110 during subsequent brazing operations. For example, a powder form of the flux material may be spread on the bit body 110, and heat may be applied by the heating system 108 to the bit body 110 as well as to the flux material spread on the bit body 110. The heating system 108 may apply the heat to increase the temperature of bit body 110 and the flux material to above the activation temperature of the flux material. Alternatively, the flux material may be applied to the bit body 110 after the bit body 100 is heated by the heating system 108 to a preheat temperature that equals or exceeds the activation temperature of the flux material. The controller 130 may control operation of the heating system 108, for example, by turning on and off heat from the heating system 108 to maintain the bit body 110 within a particular range of temperature values. In an example embodiment, the activation temperature range of the flux material is between approximately 540 °C and 610 °C.

Similarly, after the cutters 118 are inspected and each cutter is assigned to a corresponding pocket in the bit body 110, a flux material may be applied to the cutters 118 to minimize oxidation of the cutters 118 when the cutters 118 are later exposed to higher temperature during the brazing operation. For example, the cutters 118 may be immersed in a flux bath 122 of the flux application system 112 that includes a heater to heat the cutters 118 and/or the flux material to near a preheat temperature equal or above the activation temperature of the flux material. In alternative exemplary embodiments, the cutters 118 may be heated to a temperature, for example, above the activation temperature of the flux material and dipped in the flux material to apply the flux material to the cutters 118.

For example, one or both of the robot arms 102,104 may perform the function of dipping the heated cutters into the flux material. In an example embodiment, the controller 130 may control heating of the PDC cutters 118 in the application of the flux material. To minimize damage to the PDC cutters 118 due to excessive heat exposure, the temperature of the PDC cutters 118 may be maintained close to the activation temperature of the flux material during and subsequent to the application of the flux material. After the PDC cutters 118 are covered with the melted flux material, the PDC cutters 118 are placed in the pockets 120, where the heating system 108 continues to apply heat as needed to maintain the bit body 110 and the cutters 118 that are positioned in the pockets 120 of the bit body 110 near a preheat temperature equal or above the activation temperature of the flux material.

After the flux material is applied to the bit body 110 and to the PDC cutters 118, the robot 106 may start positioning each cutter of the cutters 118 inside a corresponding pocket of the pockets 120. For example, the robot 106 may position each cutter inside a corresponding pocket using one or both arms 102, 104 and based on the assignment of each cutter to the corresponding pocket. One or both of the arms 102, 104 may place each cutter such that a center of the cutter is positioned substantially directly over a center of the corresponding pocket. The robot 106 determines the center of each cutter and the center of each pocket based on the inspection of the cutters 118 and of the pockets 120 performed using the one or more cameras 114.

After a particular cutter is positioned in a corresponding pocket, the robot 106 may place a brazing material within the pocket between the cutter and the pocket wall(s). Again, the robot 106 may perform this function using one or both arms 102, 104. In an exemplary embodiment, the brazing material may have a melting temperature ranging between 705 °C and 750 °C. For example, an alloy, such as Castolin 1703, BAG 22 and BAG 24, may be used as a brazing material. The brazing material may be placed within the pocket while the heating system 108 continues to apply heat to maintain the bit body 110 and the cutter near the preheat temperature.

To bond the cutter that is placed in the corresponding pocket to the bit body 110, the robot 106 may apply heat for a duration of time to the brazing material that is placed within the pocket. For example, the arm 104 (or another robot arm) may be used to apply heat to the brazing material using a heat source 116. The controller 130, a controller within the robot 106, another controller, or a combination thereof may control operation of the arm 104 and the amount and duration of heat that is applied to the brazing material. The heat source 116 may apply heat to the brazing material, for example, using a flame or an induction coil. For example, the heat source 116 may heat up an induction coil that is positioned within the pocket that in turn heats up the brazing material. Use of an induction coil instead of a flame may limit the effect of the heat on neighboring pockets and on corresponding PDC cutters positioned in the pockets.

The robot 106 controls the amount of heat that is applied to achieve a desired brazing temperature, which is a temperature at which the brazing material is adequately melted to form a bond between the cutter and the bit body 110 when the brazing material cools down. The robot 106 also controls the duration of heat application to the brazing material. In some exemplary embodiments, the robot 106 may apply an amount of heat to the brazing material for a duration of time that is determined prior to the application of the heat starts. Alternatively, the robot 106 may apply an amount of heat for a duration of time that is based on temperature information (for example, from a temperature sensor) that indicates the temperature of the brazing material and/or the area around the brazing material. The robot 106 may also adjust the amount of heat as needed to achieve the desired brazing temperature.

In some alternative exemplary embodiments of the brazing operation, the robot 106 may first apply heat to the pocket prior to the placement of the brazing material to increase the temperature of the bit body (e.g., the wall of the pocket) to the melting temperature of the brazing material. For example, the robot 106 may apply heat to the wall of a particular pocket, and once the wall of the particular pocket reaches or exceeds the melting temperature of the brazing material, the robot 106 may bring the brazing material in contact with the wall of the pocket in order to melt the brazing material within the pocket.

During the brazing operation, while one arm 104 is applying heat to the brazing material and/or to the bit body, the other arm 102 may spin the cutter within the pocket to evenly distribute the melted brazing material within the pocket and to push the melted flux material out of the pocket. After the brazing material is melted and the cutter is spun within the pocket for a duration of time to adequately remove the molten flux material from the pocket, the robot 106 may perform an adjustment in the position of the PDC cutter within the pocket. After performing a final positioning of the PDC cutter within the pocket, the robot 106 removes the heat to allow the melted brazing material to cool down and solidify forming a bond between the cutter and the bit body 110.

The robot 106 may perform placement of each cutter of the cutters 118 in a corresponding pocket of the pockets 120 and perform the brazing operation as described above. Because the robot 106 can consistently control the amount of heat used in the brazing operation and the duration of heat application, the cutters 118 get bonded to the bit body 110 in a consistent manner, which also result in consistent level of quality between different PDC drill bits.

Although two robot arms are described above and shown in Figure 1, in alternative exemplary embodiments, the robot 106 may have more than two arms. Further, the heating system 108 may have a different appearance than shown in Figure 1 without departing from the scope of this disclosure. In alternative embodiments, the positioning of the heating system 108 relative to the bit body 110 may be different than shown in Figure 1. Further, the positioning of any of the components of the system 100 relative to other components of the system 100 is only illustrative and is not intended to be limiting.

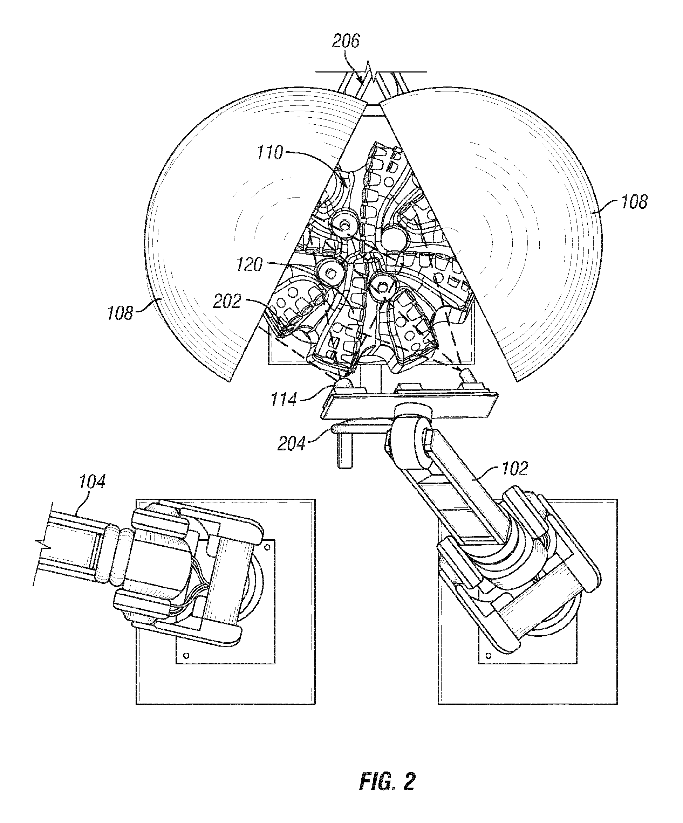

Figure 2 illustrates a snapshot of a cutter pocket inspection being performed by the system of Figure 1 in accordance with an exemplary embodiment. As illustrated in Figure 2, the heating system 108 is positioned around the bit body 110 in a similar manner illustrated in Figure 1. The heating system 108 may be controlled by the controller 130 of Figure 1 via one or more wires 206. The bit body 100 includes a number of blades 202 that each have a number of corresponding pockets 120 for the positioning of cutters, such as the PDC cutters 118 shown in Figure 1.

As illustrated, the one or more cameras 114 are attached to the robot arm 102. For example, the robot arm 102 may move the one or more cameras 114 as needed to collect information about the pockets 120. For example, the one or more cameras 114 may collect dimension information of the pockets 120. The dimension information may be used, for example, by the controller 130 or another dedicated controller, to enable determination of shape and size of a particular pocket. The dimension information may also be used to determine a center of a particular pocket. In some exemplary embodiments, the dimension information may enable generation of a 3-dimensional (3D) view of the pockets 120.

In some exemplary embodiments, a knob 204 or 5 axes CN machines (not shown) may be used for adjusting the position of the bit body 110. For example, once the one or more cameras 114 collect adequate information on the pockets that are exposed through the opening in the heating system 108, the knob 204 may be used to rotate the bit body 110, such that pockets that are, for example, in the back of the heating system 108 become accessible to the one or more cameras 114. Although a 5 axes CN machine has been mentioned above to use within the exemplary embodiments described herein, the CN machine has a different number of axes, such as 3 axes or 4 axes, in other exemplary embodiments.

In the exemplary embodiment of Figure 2, the robot arm 104 is not involved in the inspection of the pockets 120 of the bit body. However, in alternative embodiments, the robot arm 104 may be used in addition to or instead of the robot arm 102 to perform inspection of the pockets 120. Further, one or both arms 102, 104 may be used to inspect cutters, such as the cutters 118 of Figure 1, to collection dimension information of the cutters in a similar manner described above with respect to the pockets 120. A controller (e.g., the controller 130) may determine, for example, size and shape of each cutter in the similar manner described above with respect to the pockets 120.

For example, the controller 130 may use the information collected through inspection of the pockets 120 and the cutters to assign each cutter to a matching pocket. For example, the pockets on each blade may be identified by the position of the particular pocket on the particular label. To illustrate, the pockets on a particular blade may be designated 1 to N. Accordingly, each cutter may be assigned a label BxCy, where x identifies the particular blade and where y identifies the particular pocket on the blade x. For example, a cutter labelled B1C5 is assigned to pocket 5 on blade 1. Computer-aided design (CAD) systems may be used in designating blades and pockets and enable assignment of cutters to pockets.

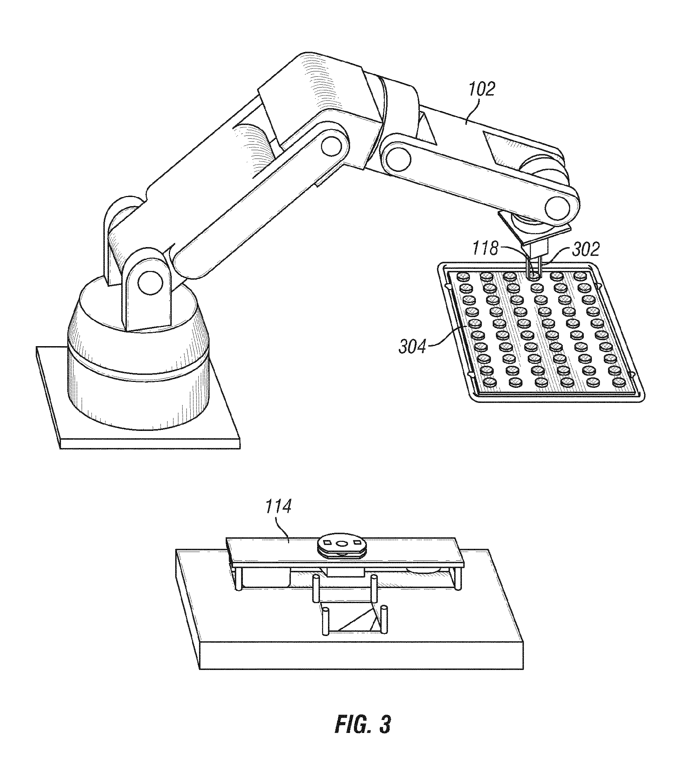

Figure 3 illustrates a snapshot of a cutter placement being performed in accordance with an exemplary embodiment. As illustrated in Figure 3, the robot arm 102 now has a capture tool 302, instead of the one or more cameras 114. The capture tool 302 enables the robot arm 102 to pick up cutters 118 from a cutter tray 304. After the cutters 118 have been inspected as described above with respect to Figures 1 and 2, the cutters 118 may be immersed in a flux bath to apply flux material on the cutters 118. Because the cutters 118 have been assigned to pockets (e.g., the pockets 120 of Figures 1 and 2), for example, by designating positions in the cutter tray 304 to correspond to pockets in the bit body 110 (shown in Figures 1 and 2), the robot arm 102 picks up and positions each cutter in the cutter tray 304 in its designated pocket in the bit body 110. As illustrated in Figure 3, the robot arm 102 is about to pick up a PDC cutter 118 for positioning the PDC cutter 118 in a corresponding pocket in the bit body 110.

In some alternative exemplary embodiments, the robot arm 102 may pick up the cutter 118 from the cutter tray 304 prior to the application of a flux material and immerse the cutter in a flux material (for example, by dipping the cutter in a flux bath 122 of Figure 1) and subsequently position the cutter 118 in its assigned pocket based on the designation of the cutter's position in the cutter tray 304. In alternative embodiments, a different system of positioning the cutters 118 in the pockets of the bit body 110 may be used without departing from the scope of this disclosure. Further, although the robot arm 102 is illustrated in Figure 3, the robot arm 104 or another robot arm may be used in addition to or instead of the robot arm 102 to perform the positioning of the cutters 118 in the pockets 120 as described above.

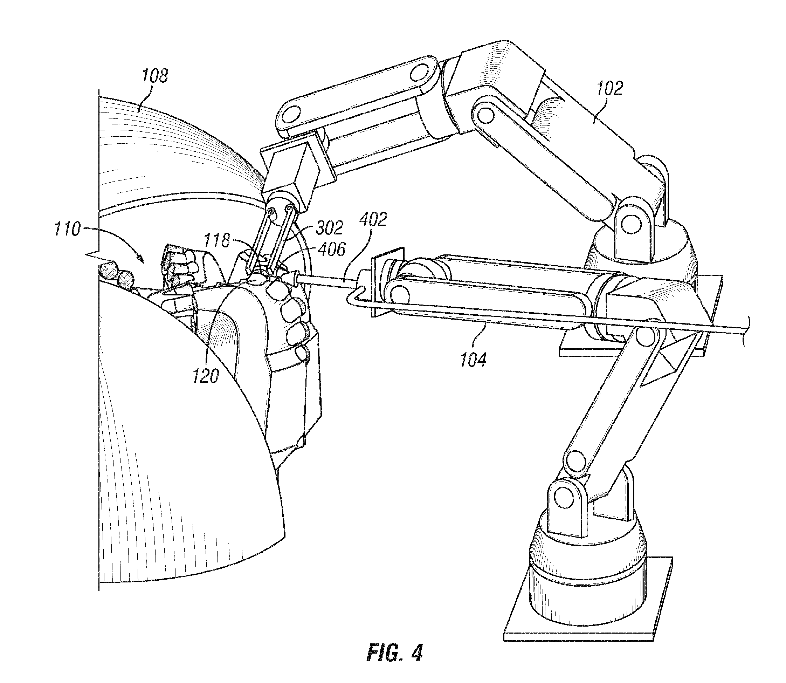

Figure 4 illustrates a snapshot of an automated brazing operation being performed in accordance with an exemplary embodiment. As illustrated in Figure 4, the robot arm 102 uses the capture tool 302 to handle the cutter 118. For example, the robot arm 102 handles positioning of the cutter 118 within a pocket 120 of the bit body 110. Further, the robot arm 102 may maintain the cutter 118 within the pocket 120 during the brazing operation. The robot arm 102 may also handle the cutter 118 while the robot arm 104 applies a brazing material 406 to the pocket 120. For example, the robot arm 104 may place the brazing material 406 inside the pocket 120 using a brazing material application tool 402. In an exemplary embodiment, the robot arm 104 may place the brazing material 406 inside the pocket 120 and subsequently apply heat, for example, using the heat source 116 of Figure 1 to melt the brazing material.

In an alternative exemplary embodiment, the operation illustrated in Figure 4 may be performed after the wall of the pocket 120 is heated using a heating system/device, such as the heat source 116 of Figure 1. For example, another robot arm may apply heat to the wall of the pocket, directly or indirectly, using the heat source 116 until the temperature of the wall equals or exceeds the melting temperature of the brazing material 406. After the temperature of the wall of the pocket 120 equals or exceeds the melting temperature of the brazing material 406, the robot arm 104 may bring the brazing material 406 in contact with the wall of the pocket 120, thereby melting the brazing material 406 within the pocket 120. In an exemplary embodiment, the brazing material 406 may have a melting temperature ranging between 705 °C and 750 °C. For example, the brazing material 406 may be an alloy, such as Castolin 1703, BAG 22 and BAG 24.

In an exemplary embodiment, the robot arm 102 may spin the cutter 118 within the pocket 102 as a brazing material 406 is being applied within the pocket 120. For example, while the robot arm 104 applies heat to the brazing material 406 subsequent to positioning of the brazing material 406 within the pocket 120, the arm 102 may spin the cutter 118 within the pocket 120 to evenly distribute the melted brazing material within the pocket 120 and to push the melted flux material out of the pocket 120. After the brazing material 120 is melted and the cutter 118 is spun within the pocket for a duration of time to adequately remove any molten flux material from the pocket 120, the robot arm 102 may perform an adjustment in the position of the cutter 118 within the pocket 120. Subsequent to performing the final adjustment of the position of the cutter 118 within the pocket 120, the melted brazing material is allowed to cool down and solidify forming a bond between the cutter 118 and the bit body 110 within the pocket 120.

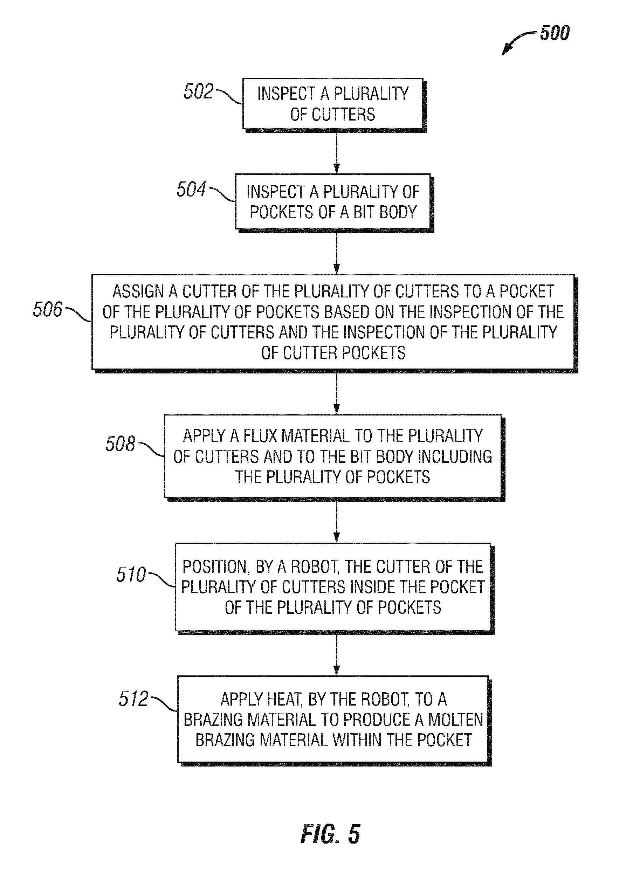

Figure 5 illustrates a method 500 of manufacturing PDC drill bits including an automated brazing operation that uses the system of Figure 1 in accordance with an exemplary embodiment. The method 500 includes inspecting a plurality of cutters, at step 502. At step 504, the method includes inspecting a plurality of pockets of a bit body. For example, the one or more cameras 114 shown in Figures 1 and 2 may be used to perform inspection of cutters 118 and pockets 120. As described above, a controller, such as the controller 130 shown in Figure 1, may determine, for example, size and shape of the pockets and cutters. The method 500 further includes, at step 506, assigning a cutter of the plurality of cutters to a pocket of the plurality of pockets based on the inspection of the plurality of cutters and the inspection of the plurality of cutter pockets.

For example, as illustrated in Figure 1, the controller 130 may assign each cutter of the cutters 118 to a pocket of the pockets 120 in the bit body 110. Instead of the controller 130, a controller in the robot 106 or another controller may perform analysis of information from the one or more cameras 114 and also perform assignment of each cutter to a corresponding pocket. At step 508 of the method 500, a flux material may be applied to the plurality of cutters and to the bit body including the plurality of pockets. For example, applying the flux material may include heating the bit body to a first temperature and heating the plurality of cutters to a second temperature. The first temperature and the second temperature may equal or exceed an activation temperature of the flux material.

To illustrate, a powder form of a flux material may be spread on the bit body 110 of Figure 1 before or after the bit body 110 is heated to a temperature (the first temperature) that equals or exceeds the activation temperature of the flux material. Similarly, the cutters (such as the cutters 118 of Figure 1) may be immersed in flux bath that has a flux material while, before, or after being heated to a temperature (the second temperature) that equals or exceeds the activation temperature of the flux material. In some exemplary embodiments, the first temperature and the second temperature are approximately the same.

At step 510 of the method 500, the robot positions the cutter of the plurality of cutters inside the pocket of the plurality of pockets. For example, as illustrated in Figures 3 and 4, the robot arm 102 may pick up a cutter from a cutter tray 304 to position the cutter in a pocket of a bit body 110. The robot arm 102 may place each cutter such that a center of the cutter is positioned substantially directly over a center of the pocket, whenever possible.

At step 512 of the method 500, the robot applies heat to a brazing material to produce a molten brazing material within the pocket. For example, the robot arm 104 shown in Figures 1 and 4 may use a heating device/system (for example, the heat source 116 of Figure 1), such as a flame source or an induction heater, to heat a brazing material that is previously placed within the pocket 120. Heating the brazing material may melt the brazing material and produce a molten brazing material within the pocket 120. Alternatively, the robot arm 104 may heat the wall of the pocket 120 and/or the PDC cutter 118 and subsequently bring a brazing material in contact with the wall of the pocket 120 to melt the brazing material within the pocket 120.

In some exemplary embodiments, the method 500 may also include spinning a cutter within a pocket of the bit body while a brazing material is being applied within the pocket. Spinning the cutter while applying the brazing material helps to evenly distribute the melted brazing material within the pocket and to push melted flux material out of the pocket. For example, a cutter may be spun within a pocket while applying heat to melt a brazing material that is previously positioned within the pocket. To illustrate, the robot arm 102 shown in Figure 4 may spin the cutter 118 within the pocket 120 while the robot arm 104 or another robot arm applies heat to the brazing material previously positioned within the pocket 120.

Although Figure 5 illustrates a particular order of the steps of the method 500, the method 500 is not restricted to the particular order of performing the steps. The method 500 may be performed various orders of the steps without departing from the scope of this disclosure. For example, some of the steps of the method 500 may be performed simultaneously. Further, although reference is made to the system 100 of Figure 1, the method 500 may be performed using other systems without departing from the scope of this disclosure. Although the method 500 is described with respect to PDC drill bits, the method 500 and the system 100 of Figure 1 may be implemented with respect to other types of drill bits that have non-PDC cutters that can be adversely affected by over-exposure to heat.

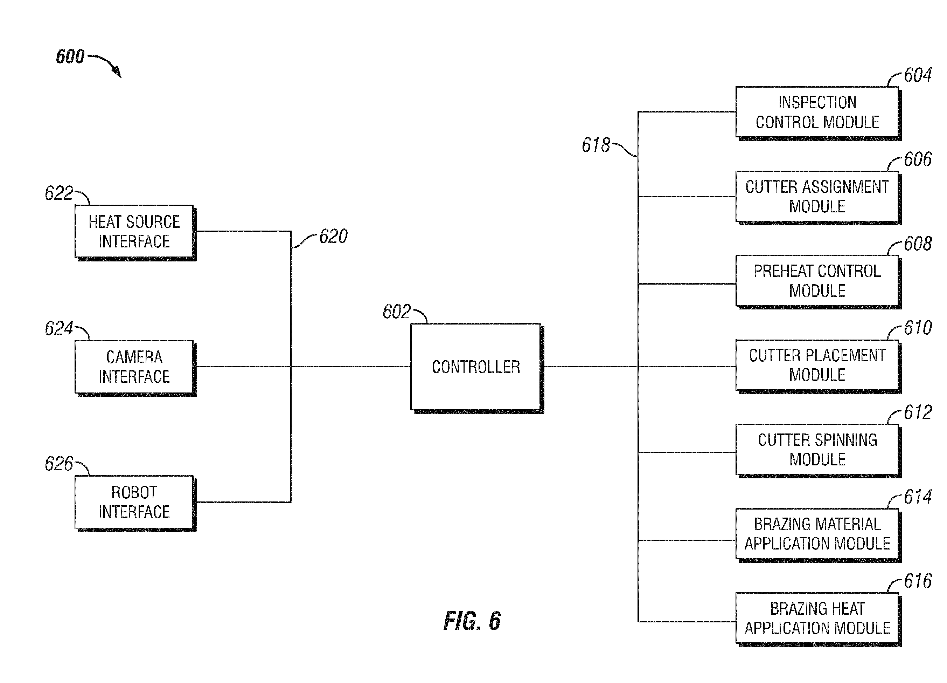

Figure 6 illustrates a computer system 600 that controls operations of the system of FIG. 1 in accordance with an exemplary embodiment. The computer system 600 includes a controller 602 that controls operations of the computer system 600. The controller 602 interacts with a number of modules and interfaces of the computer system 600. In an exemplary embodiment, the controller 602 may correspond to the controller 130 of Figure 1. In an alternative embodiment, the control system 100 may correspond to the controller 130 of Figure 1. In yet another alternative embodiment, the controller 602 or the controller system 100 may function as a controller within the robot 106 of Figure 1 or another controller in the system 100 of Figure 1. Further, the controller 602 may be a single controller or multiple controllers that are located within a single device or within multiple devices. For example, the controller 602 may be one or more processors (e.g., Intel^{®} or ARM^{®} microprocessors) and may include software code stored in a memory device, such as an SRAM. The controller 602 may also be fully or partially implemented in hardware, such as one or more field programmable gate arrays (FPGAs) or one or more application specific semiconductor devices (ASICs).

In some exemplary embodiments, the computer system 600 includes an inspection control module 604 for controlling inspections of a plurality of cutters (e.g., the PDC cutters 118 of Figure 1) and inspections of a plurality of pockets (e.g., the pockets 120 of Figure 1) of a bit body (e.g., the bit body 110 of Figure 1). The computer system 600 further includes a cutter assignment module 606 for controlling assignment of a cutter of the plurality of cutters to a pocket of the plurality of pockets based on the inspection of the plurality of cutters and the inspection of the plurality of cutter pockets. A preheat control module 608 may be used to control application of a flux material to a bit body (e.g., to the bit body 110) by controlling application of heat for the purpose of melting the flux material. In some exemplary embodiments, the preheat control module 608 may also be used to control application of a flux material to cutters, such as the PDC cutters 118.

The computer system 600 may also include a cutter placement module 610 for controlling operations of a robot (e.g., the robot 106 of Figure 1) in positioning the cutter of the plurality of cutters inside the pocket of the plurality of pockets. Further, a cutter spinning module 612 may control spinning of the cutter of the plurality of cutters within the pocket of the plurality of pockets. For example, the cutter spinning module 612 may control the spinning operation described with respect to Figure 4, where the robot arm 102 spins the cutter 118 within the pocket 120.

The brazing material application module 614 may control placement of a brazing material within the pocket, for example, prior to applying the heat to melt the brazing material. For example, the brazing material application module 614 may control placement of the brazing material 406 described with respect to Figure 4.

The brazing heat application module 616 may control application of heat by the robot to a brazing material to produce a molten brazing material within the pocket. For example, the brazing heat application module 616 may control the application of heat to melt the brazing material 406 described with respect to Figure 4. For example, the brazing heat application module 616 may operate to control the duration and amount of heat applied to the brazing material, thereby controlling the exposure of the PDC cutters (e.g., the PDC cutters 118) to heat that may damage the PDC cutters.

The different modules 604-616 may interact with the components of the system 100 of Figure 1 via one or more of the interfaces 622, 624, 626. To illustrate, each of the modules 604-616 may communicate with the controller 602 via a communication bus 618. In turn, the controller 602 may communicate with the components of the system 100 via a preheat system interface 622, a camera interface 624, and a robot interface 626. For example, to control a robot arm (e.g., the robot arms 102, 104) one or more of the modules 604-616 may communicate with the controller 602, which in turn communicates with the robot arm via the robot interface 626. In an embodiment, where the computer system 600 or the controller 602 is within the robot (i.e., within an automated device), the robot interface 626 may be an interface to the arms of the robot. Similarly, the controller 602 may communicate with a heating system, such as the heating system 108 of Figure 1, via the preheat system interface 622. As another example, the controller 602 may communicate one or more cameras (e.g., the one or more cameras 114 of Figure 1) via the camera interface 624.

Although a particular topography of the modules is illustrated in Figure 6, in alternative embodiments, the computer system 600 may have other topologies. Further, one or more of the modules 604-616 of the computer system 600 may be a software module, a hardware module, or a combination thereof. For example, one or more of the modules 604-616 module may include a software code stored in a memory device such as a static random access memory (SRAM).

Although each exemplary embodiment has been described in detailed, it is to be construed that any features and modifications that is applicable to one embodiment is also applicable to the other embodiments.

Although the invention has been described with reference to specific embodiments, these descriptions are not meant to be construed in a limiting sense. Various modifications of the disclosed embodiments, as well as alternative embodiments of the invention will become apparent to persons of ordinary skill in the art upon reference to the description of the exemplary embodiments. It should be appreciated by those of ordinary skill in the art that the conception and the specific embodiments disclosed may be readily utilized as a basis for modifying or designing other structures or methods for carrying out the same purposes of the invention. It should also be realized by those of ordinary skill in the art that such equivalent constructions do not depart from the spirit and scope of the invention as set forth in the appended claims. It is therefore, contemplated that the claims will cover any such modifications or embodiments that fall within the scope of the invention.

## Claims

1. A method of manufacturing polycrystalline diamond compact (PDC) drill bits, the method comprising:
inspecting a plurality of cutters;
inspecting a plurality of pockets of a bit body;
assigning a cutter of the plurality of cutters to a pocket of the plurality of pockets based on the inspection of the plurality of cutters and the inspection of the plurality of cutter pockets;
positioning, by a robot, the cutter of the plurality of cutters inside the pocket of the plurality of pockets; and
applying heat, by the robot, to a brazing material to produce a molten brazing material within the pocket.

2. The method of Claim 1, further comprising applying a flux material to the plurality of cutters and to the bit body including the plurality of pockets;
wherein, optionally, applying the flux material comprises heating the bit body to a first temperature and heating the plurality of cutters to a second temperature, and wherein the first temperature and the second temperature equal or exceed an activation temperature of the flux material.

3. The method of Claim 1, further comprising spinning, by the robot, the cutter of the plurality of cutters within the pocket of the plurality of pockets while applying the heat to the brazing material within the pocket; and/or
further comprising placing the brazing material within the pocket prior to applying the heat.

4. The method of Claim 1, wherein positioning the cutter of the plurality of cutters inside the pocket of the plurality of pockets comprises placing the cutter such that a center of the cutter is positioned substantially directly over a center of the pocket.

5. The method of Claim 1, wherein inspecting the plurality of cutters and inspecting the plurality of pockets include using a camera to gather dimension information of the plurality of cutters and the plurality of pockets; and/or
wherein applying heat to the brazing material comprises applying the heat for a duration of time and wherein the duration of time is determined prior to applying the heat.

6. The method of Claim 1, further comprising removing the heat away from the pocket to enable the molten brazing material cool down.

7. A system for manufacturing polycrystalline diamond compact (PDC) drill bits, the system comprising:
a camera for inspecting a plurality of cutters and for inspecting a plurality of pockets of a bit body;
a robot configured to position a PDC cutter of a plurality of PDC cutters inside a pocket of a plurality of pockets and to apply heat to a brazing material to produce a molten brazing material within the pocket of the plurality of pockets; and
a heating system for heating the bit body including the plurality of pockets to a preheat temperature.

8. The system of Claim 7, further comprising a controller, wherein the robot comprises a first arm and a second arm, and wherein the controller is configured to control the camera, the first arm, the second arm, and the heating system.

9. The system of Claim 8, wherein the controller is further configured to analyze information from the camera to determine a size of each PDC cutter of the plurality of PDC cutters and a size of each pocket of the plurality of pockets;
wherein, optionally, the controller is configured to assign each PDC cutter of the plurality of PDC cutters to a corresponding pocket of the plurality of pockets based on the size of each PDC cutter and the size of each pocket.

10. The system of Claim 8, wherein the first arm is configured to position the PDC cutter of the plurality of PDC cutters inside the pocket of the plurality of pockets, and wherein the second arm is configured to apply the heat to the brazing material.

11. The system of Claim 7, further comprising a second heating system for heating the plurality of cutters to the preheat temperature, wherein the preheat temperature equals or exceeds an activation temperature of a flux material applied to the plurality of cutters;
and, optionally, further comprising a flux bath for applying the flux material to the plurality of cutters.

12. An automated device for use in a manufacture of polycrystalline diamond compact (PDC) drill bits, the automated device comprising:
a controller;
a first arm for positioning a cutter of a plurality of cutters inside a pocket of a plurality of pockets of a bit body; and
a second arm for applying heat to a brazing material to produce a molten brazing material within the pocket of the plurality of pockets, wherein the controller is configured to control the first arm and the second arm.

13. The automated device of Claim 12, wherein the first arm is configured to spin the cutter while the second arm applies the heat to the brazing material; and/or
wherein at least one of the first arm and the second arm is configured to operate a camera to inspect the plurality of cutters and the plurality of pockets; and/or
wherein the second arm is configured to position the brazing material within the pocket prior to applying the heat to the brazing material.

14. A computer system for controlling manufacturing of polycrystalline diamond compact (PDC) drill bits, the computer system comprising:
a module for controlling inspections of a plurality of cutters and inspections of a plurality of pockets of a bit body;
a module for controlling assignment of a cutter of the plurality of cutters to a pocket of the plurality of pockets based on the inspection of the plurality of cutters and the inspection of the plurality of cutter pockets;
a module for controlling operations of a robot in positioning the cutter of the plurality of cutters inside the pocket of the plurality of pockets; and
a module for controlling application of heat by the robot to a brazing material to produce a molten brazing material within the pocket.

15. The computer system of Claim 14, further comprising a module for controlling application of a flux material to the plurality of cutters and to the bit body including the plurality of pockets; and/or
further comprising a module for controlling spinning of the cutter of the plurality of cutters within the pocket of the plurality of pockets; and/or
further comprising a module for controlling positioning of the brazing material within the pocket prior to applying the heat.
